# EUROPÄISCHE PATENTSCHRIFT

(11) **EP 2 332 867 B1**
(45) Veröffentlichungstag und Bekanntmachung des Hinweises auf die Patenterteilung: **20.03.2013**
(21) Anmeldenummer: 10194447.8
(22) Anmeldetag: 10.12.2010
(51) Int. Cl.: B65G 47/84

(54) **Vorrichtung und Verfahren zum Transportieren von Behältnissen mit Bodenführung**
Device and method for transporting containers with bottom guide
Dispositif et procédé de transport de récipients dotés d'un guidage inférieur

(30) Priorität: 14.12.2009 DE 102009058084
(43) Veröffentlichungstag der Anmeldung: 15.06.2011
(73) Patentinhaber: Krones AG, 93073 Neutraubling (DE)
(72) Erfinder: Hahn, Wolfgang, 93073, Neutraubling (DE); Laumer, Roland, 93047, Regensburg (DE)
(74) Vertreter: Bittner, Bernhard

(56) Entgegenhaltungen:
- EP-A1- 0 382 161
- EP-A1- 1 495 973
- EP-A1- 2 186 759
- WO-A1-01/62636
- WO-A1-2004/014779
- DE-A1- 2 736 206
- DE-A1- 4 332 327
- DE-A1-102005 041 120
- DE-A1-102005 042 275
- DE-A1-102008 037 101
- DE-B1- 2 806 080
- JP-A- 2009 046 224

## Beschreibung

Die vorliegende Erfindung bezieht sich auf eine Vorrichtung, nach Anspruch 1, zum Transportieren von Behältnissen. In der getränkeherstellenden Industrie ist es seit längerem bekannt, dass die herzustellenden Getränkebehältnisse unterschiedlichen Behandlungsschritten unterworfen werden, wie beispielsweise einer Blasumformung, bei der Kunststoffvorformlinge zu Kunststoffbehältnissen umgeformt werden, Sterilisationsvorgängen, Füllvorgängen, Verschließvorgängen und auch Etikettiervorgängen. Dabei werden die Getränkebehältnisse üblicherweise vereinzelt geführt. In Abhängigkeit von dem jeweiligen Behandlungsvorgang sind dabei oft unterschiedliche Teilungen vorgesehen. Bei einer Blockung mit Post-Labeling, d. h. einem Etikettieren der bereits befüllten und verschlossenen Flasche wird im Stand der Technik üblicherweise eine Schneckenblockung eingesetzt. Die Schnecke wird dabei für den Teilungsverzug eingesetzt, da üblicherweise in der Etikettiermaschine eine größere Teilung als in der Füllmaschine verwendet wird. Der Nachteil dieser Vorgehensweise besteht darin, dass bei Änderungen der Flasche Formatteile benötigt werden, bzw. Formatteile geändert werden müssen.

Weiterhin ist oftmals kein durchgängiges Transportieren der Flasche am Tragring möglich. Insbesondere wenn die Flasche bereits mit einem Verschluss verschlossen ist, ist ein Führen der Flasche nur mit einem Greifelement möglich, welches unterhalb des Tragrings eingreift, da der Raum oberhalb des Tragrings von dem Verschluss verdeckt wird. Daher können verschlossene Flaschen schwer von einem Greifelement an ein weiteres übergeben werden, da üblicherweise bei noch geöffneten Flaschen die Greifelemente wechselweise oberhalb und unterhalb des besagten Tragrings eingreifen.

WO 01/62636 A1 beschreibt eine Vorrichtung entsprechend den Merkmalen des Oberbegriffs des Anspruchs 1.

Andere Transporteinrichtungen wie übliche Transportbänder weisen dabei den Nachteil auf, dass bei unterschiedlich hohen Behältnissen die Mündungen auf unterschiedlichen Höhen angeordnet sind und daher eine Übernahme durch weitere Greifklammern erschwert wird.

Der vorliegenden Erfindung liegt daher die Aufgabe zugrunde, eine Transporteinrichtung für Behältnisse zur Verfügung zu stellen, die in einfacher Weise auf unterschiedliche Behältnishöhen angepasst werden kann und daher für unterschiedlichste Behältnisse bzw. Behältnisformate einen Transport derselben erlaubt. Insbesondere soll auch eine Möglichkeit geschaffen werden, um Behältnisse unabhängig von ihrer Höhe so zu transportieren, dass das Höhenniveau der Mündung der Behältnisse konstant bleibt.

Diese Aufgaben werden erfindungsgemäß durch die Gegenstände der unabhängigen Patentsprüche gelöst. Vorteilhafte Ausführungsformen und Weiterbildungen sind Gegenstand der Unteransprüche.

Erfindungsgemäß weißt die Vorrichtung die Merkmale des Anspruchs 1 auf.

Es wird daher vorgeschlagen, dass das Führungselement das Behältnis bewegt, dabei jedoch der Boden des Behältnisses abgestützt wird. Vorzugsweise wird daher während des Transports der Behältnisse auf ein Greifen der Behältnisse beispielsweise unterhalb des Tragrings verzichtet. Besonders bevorzugt übernimmt das Bodenstützelement die Aufgabe, ein Abrutschen des Behältnisses in seiner Längsrichtung zu verhindern. Durch die Höhenverstellbarkeit des Bodenstützelements, d. h. insbesondere die Verstellbarkeit des Bodenstützelements in einer Längsrichtung des Behältnisses ist es möglich, unterschiedlich hohe Behältnisse führen zu können, ohne dabei die Höhe bzw. die Transporthöhe der Mündungen der Behältnisse verändern zu müssen. Dies ist vorteilhaft, da die Behältnisse üblicherweise von vorhergehend oder ggf. auch folgenden Transporteinrichtungen auf einer bestimmten Höhe übergeben werden und auf diese Weise diese Höhe nicht verändert werden muss, wenn eine Anpassung an unterschiedliche Behältnishöhen erfolgen soll.

Bei einer vorteilhaften Ausführungsform weist die Vorrichtung ein Antriebselement auf, mittels dessen die Höhenverstellung des Bodenstützelementes bewirkbar ist. So ist es möglich, dass in einem bestimmten Umstellbetrieb die Höhenverstellung des Bodenstützelementes verändert wird. Üblicherweise weisen derartige Anlagen eine Vielzahl von Führungselementen zum Führen einer Vielzahl von Behältnissen auf. Dabei wäre es möglich, dass jedem Führungselement auch ein Bodenstützelement zugeordnet ist, es wäre jedoch bevorzugt auch möglich, dass ein Bodenstützelement zum Stützen sämtlicher Behältnisse dient.

Erfindungsgemäß ist eine Bewegung des Antriebselementes mit einer Bewegung der Antriebseinrichtung koppelbar. So kann in einem speziellen Umstellbetrieb, beispielsweise der Servomotor einer Sternsäule, der zum Antrieb der Führungselemente dient, auch insbesondere zum Antrieb der Höhenverstellung betrieben werden. In diesem Fall kann das Antriebselement beispielsweise ein Zahnrad oder dergleichen sein, welches einen Spindelantrieb für die Höhenverstellung betätigt. So ist es möglich, dass im Rahmen eines Sortenwechsels eine Kopplung greift und ein Antrieb für das Bodenstützelement derart einstellt, dass das Bodenstützelement auf die gewünschte Behälterhöhe verfahren wird.

Vorteilhaft kann mit dem Bodenstützelement auch ein weiteres Element, wie etwa ein Überschubblech zum Schieben der Behältnisse an eine weitere Transporteinrichtung, in der Höhe verstellt werden.

Es wäre jedoch auch möglich, dass es sich bei der Antriebseinrichtung um einen Elektromotor und insbesondere einen Servomotor handelt, mit dessen Hilfe die Höhenverstellung vorgenommen wird.

Bei einer vorteilhaften Ausführungsform ist das Bodenstützelement in der Transportrichtung des Behältnisses stationär angeordnet. Dies bedeutet, dass das Bodenstützelement sämtlichen Führungselementen zugeordnet ist und jedes Behältnis damit entlang seines Transportpfades gegenüber dem Bodenstützelement verschoben wird.

Bei einer weiteren vorteilhaften Ausführungsform weist die Vorrichtung ein zweites Führungselement auf, welches von dem ersten Führungselement verschieden und bevorzugt auch getrennt ist und welches die Behältnisse während ihres Transports führt. Dabei kann es sich beispielsweise um eine kreissegmentförmige Wand handeln, welche die Behältnisse während ihres Transports durch die ersten Führungselemente abstützt.

Vorteilhaft ist dabei die Position des zweiten Führungselements insbesondere gegenüber den ersten Führungselementen veränderbar. Auf diese Weise kann eine Umstellung auf unterschiedliche Querschnitte von unterschiedlichen Behältnissen erfolgen. Vorteilhaft ist dabei die Position des zweiten Führungselementes insbesondere in einer radialen Richtung verstellbar, insbesondere wenn die Behältnisse auf einer kreisförmigen Bahn geführt werden.

Vorteilhaft ist daher die Transportvorrichtung derart ausgeführt, dass sich keinerlei Transportelemente in unmittelbarer Nähe eines Tragrings der zu transportierenden Behältnisse befinden.

Das zweite Führungselement ist besonders bevorzugt stationär angeordnet, so dass es sich, wie erwähnt, beispielsweise um eine stationäre Wand handeln kann, gegen welche die Behältnisse während ihres Transports gedrückt werden.

Bei einer weiteren vorteilhaften Ausführungsform weist das erste Führungselement eine Aufnahmetasche auf, welche das Behältnis während seines Transports an seinem Außenumfang kontaktiert. So kann beispielsweise das Führungselement zwei Führungsteile bzw. Backen aufweisen, welche das Behältnis von zwei unterschiedlichen Richtungen her kontaktieren. Insbesondere im Zusammenwirken mit der zweiten Führungseinrichtung kann auf diese Weise durch die Aufnahmetasche ein Transport der Behältnisse vorgenommen werden.

Vorteilhaft erlauben diese Führungselemente auch einen vereinzelten Transport der Behältnisse.

Bei einer weiteren vorteilhaften Ausführungsform weist wenigstens ein Führungselement einen veränderbaren Aufnahmequerschnitt zur Aufnahme der Behältnisse auf. So ist es möglich, dass zwei Führungsteile ihren gegenseitigen Abstand zueinander ändern und/oder auch dass das zweite Führungselement bewegt wird, um so unterschiedliche Aufnahmequerschnitte von Behältnissen aufnehmen zu können. Vorteilhaft weist die Vorrichtung wenigstens eine Stelleinrichtung auf, um den Aufnahmequerschnitt wenigstens zweier Führungselemente zu ändern. Insbesondere ist es dabei möglich, dass die Aufnahmequerschnitte der beiden Führungselemente gleichzeitig geändert werden. Besonders bevorzugt bewirkt die Stelleinrichtung, dass die Aufnahmequerschnitte sämtlicher Führungselemente im Wesentlichen gleichzeitig geändert werden, so dass eine automatische Umstellung auf unterschiedliche Behältnisquerschnitte vorgenommen werden kann.

Bei einer weiteren vorteilhaften Ausführungsform weist die Vorrichtung eine Vielzahl von ersten Führungselementen auf. Besonders bevorzugt ist wenigstens ein erstes Führungselement und besonders bevorzugt sind alle ersten Führungselemente an einem drehbaren Träger angeordnet. In diesem Falle werden daher alle Führungselemente entlang einer kreisförmigen Bahn geführt. Es wäre jedoch auch möglich, dass die Führungselemente beispielsweise an einer umlaufenden Kette oder dergleichen angeordnet sind.

Die vorliegende Erfindung ist weiterhin auf eine Anlage zum Behandeln von Behältnissen gerichtet, welche eine Verschließeinrichtung zum Verschließen der Behältnisse mit Verschlüssen und eine in der Transportrichtung der Behältnisse nach der Verschließeinrichtung angeordnete Vorrichtung zum Transportieren der Behältnisse der oben beschriebenen Art aufweist.

Wie oben erwähnt, ist die Erfindung besonders bevorzugt auf den Transport von verschlossenen Behältnissen anwendbar, da diese nur noch unterhalb des Tragrings gegriffen werden können und auf diese Weise eine Übergabe von einer Greifklammer an eine weitere Greifklammer erschwert ist.

Vorteilhaft weist die Anlage eine Einrichtung zum Etikettieren der Behältnisse auf. Vorteilhaft ist diese Einrichtung zum Etikettieren der Behältnisse nach der besagten Transportvorrichtung angeordnet. Weiterhin kann nach der Transportvorrichtung auch noch eine weitere Transporteinrichtung, wie insbesondere ein Transportband, angeordnet sein. Dabei kann eine Übergabestrecke vorgesehen sein, welche die Behältnisse von der erfindungsgemäßen Transportvorrichtung auf das nachfolgende Transportband führt. Bevorzugt ist es dabei auch möglich, dass diese Übergabestrecke bzw. Übergabeplatte -bevorzugt gemeinsam bzw. gekoppelt mit dem Bodenstützelement - höhenverstellbar ist.

Es wird daher auch ein neuartiger Flaschenauslauf aus einer Anlage vorgestellt. Dabei handelt es sich, wie oben beschrieben, vorteilhaft um einen Taschenstern, der die Flaschen anstelle einer Absenkrutsche transportieren soll. Dieser Taschenstern greift die Flaschen unterhalb des Neckrings, insbesondere in einem Bereich des Flaschenkörpers. Auf diese Weise können unterschiedliche Flaschengrößen und -formen mit diesem Taschenstern transportiert werden. So könnte sich an diesen Taschenstern ein Riemen anschließen, der die Flaschen am Verschluss bzw. Gewinde auf ein höhenverstellbares Transportband schiebt.

Die vorliegende Erfindung ist weiterhin auf ein Verfahren zum Transportieren von Behältnissen gerichtet, wobei die Behältnisse mittels eines angetriebenen Führungselements entlang eines vorgegebenen Transportpfades transportiert werden und während dieses Transportpfades wenigstens zeitweise ein Bodenabschnitt der Behältnisse mittels eines Bodenstützelements abgestützt wird. Erfindungsgemäß wird dabei das Bodenstützelement insbesondere bei einem Umstellbetrieb auf unterschiedliche Formate wenigstens zeitweise hinsichtlich seiner Höhe verändert.

Vorteilhaft werden die Behältnisse während des Transports nicht unterhalb bzw. einen Tragring desselben gegriffen. Bei den Behältnissen handelt es sich bevorzugt um Kunststoffbehältnisse bzw. Kunststoffflaschen. Die Erfindung kann jedoch auch für andere Gefäße wie beispielsweise Glasflaschen oder auch Kunststoffvorformlinge Anwendung finden.

Vorteilhaft erfolgt daher die Veränderung der Höhe des Bodenstützelements zur Anpassung der Vorrichtung auf verschiedene Behältnishöhen.

Bei einem weiteren bevorzugten Verfahren werden die Behältnisse auf einer kreisförmigen Bahn transportiert. Vorteilhaft wird die Höhe des Bodenstützelements während des Transports des Behältnisses beibehalten. Dabei werden vorteilhaft sämtliche Behältnisse mit dem gleichen Bodenstützelement abgestützt bzw. bewegen sich jeweils über gleiche Bereiche des gleichen Bodenstützelements. Vorteilhaft handelt es sich bei den Behältnissen um Kunststoffbehältnisse.

Bei einem weiteren vorteilhaften Verfahren werden die Behältnisse vereinzelt geführt. Besonders bevorzugt werden die Behältnisse jeweils wenigstens von zwei Seiten her geführt. Vorteilhaft werden die Behältnisse während ihres Transports an wenigstens drei unterschiedlichen Bereichen in Umfangsrichtung berührt.

Weitere Vorteile und Ausführungsformen ergeben sich aus den beigefügten Zeichnungen:
Darin zeigen:
- Fig. 1: eine schematische Darstellung einer Anlage zum Behandeln von Behältnissen;
- Fig. 2: eine schematische Draufsicht auf eine erfindungsgemäße Vorrichtung;
- Fig. 3: eine schematische Darstellung einer erfindungsgemäßen Vorrichtung in einer weiteren Ausführungsform;
- Fig. 4: die Vorrichtung aus Fig. 3 in einer modifizierten Konstellation;
- Fig. 5: eine perspektivische Darstellung einer erfindungsgemäßen Vorrichtung;
- Fig. 6: eine Draufsicht auf die Vorrichtung aus Fig. 5;
- Fig. 7: eine Schnittdarstellung der Vorrichtung aus Fig. 5; und
- Fig. 8: eine Schnittdarstellung in einer modifizierten Arbeitsweise.

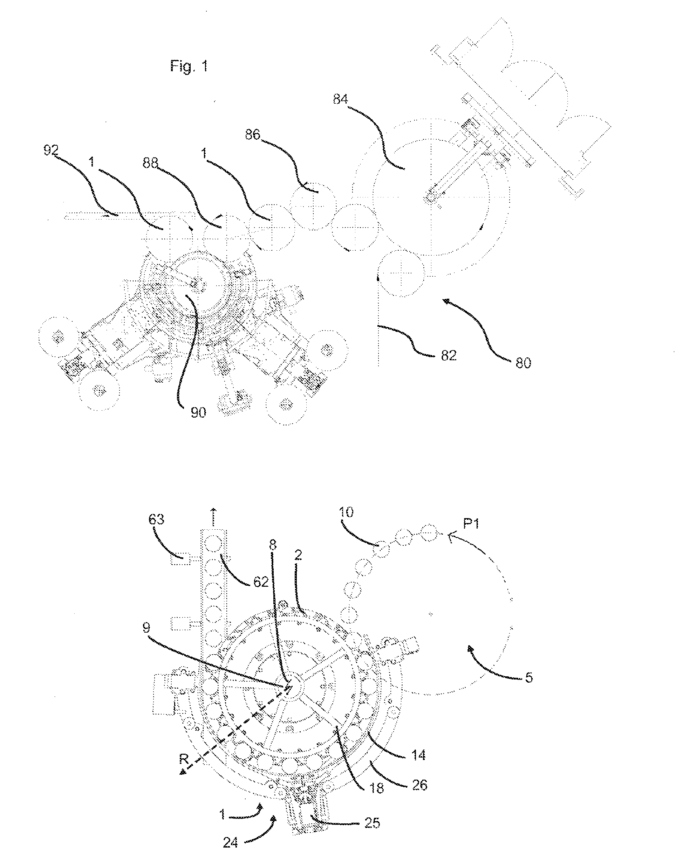

Fig. 1 zeigt eine schematische Darstellung einer erfindungsgemäßen Anlage 80 zum Behandeln von Behältnissen. Dabei bezieht sich das Bezugszeichen 82 auf einen Einlauf, der die Behältnisse zunächst einer Fülleinrichtung 84 zuführt. Nach der Fülleinrichtung werden die gefüllten Behältnisse über einen Verschließer 86 geführt und dort mit Verschlüssen verschlossen. Ab diesem Zeitpunkt können die Behältnisse üblicherweise nur noch unterhalb des Tragrings gegriffen werden. Das Bezugszeichen 1 bezieht sich auf eine Transportvorrichtung, bei der an dieser Stelle eine erfindungsgemäße Transportvorrichtung Anwendung finden kann. In diesem Bereich findet ein so genanntes Base Handling der Behältnisse statt, d. h. die Behältnisse werden hier an ihrem Boden gestützt.

Das Bezugszeichen 88 kennzeichnet einen Teilungsverzugstern, wobei hier vorteilhaft wieder ein Neckhandling stattfindet, d. h. die Behältnisse unterhalb des Tragrings gehalten werden. Das Bezugszeichen 90 kennzeichnet in seiner Gesamtheit eine Etikettiermaschine, welche die Behältnisse mit Etiketten versieht. In dieser Etikettiermaschine kann sich wiederum eine Vorrichtung der erfindungsgemäßen Art anschließen, welche die Behältnisse an ihren Böden stützt. Das Bezugszeichen 92 kennzeichnet einen Auslauf und insbesondere einen Riemenauslauf, über den die Behältnisse ausgeleitet werden. Bevorzugt werden also hier die bereits befüllten und verschlossenen Behältnisse etikettiert.

Fig. 2 zeigt eine schematische Darstellung einer erfindungsgemäßen Vorrichtung. Auch hier ist wieder erkennbar, dass Behältnisse 10 zunächst entlang des Pfeils P1 geführt werden und so der Vorrichtung 1 zugeführt werden. Die Vorrichtung weist dabei ein Trägerrad 18 auf, welches sich hier im Uhrzeigersinn dreht. Das Bezugszeichen 8 kennzeichnet (nur schematisch) eine Antriebseinrichtung, welche das Trägerrad 18 antreibt. An dem Trägerrad 18 ist eine Vielzahl von Führungselementen bzw. Führungseinrichtungen 2 vorgesehen, welche die Behältnisse hier übernehmen, wobei die Führungselemente 2 hier taschenartig ausgebildet sind, um die Behältnisse so aufnehmen zu können.

Das Bezugszeichen 14 kennzeichnet eine weitere Führungseinrichtung, welche hier als Umfangswand ausgebildet ist, damit die Behältnisse 10 nicht in radialer Richtung nach außen gleiten können. Damit werden die Behältnisse 10 einerseits mit den Führungselementen 2 und andererseits durch die zweite Führungseinheit 14 entlang des Transportpfades transportiert. Das Bezugszeichen 24 zeigt eine Stelleinrichtung, mit der die zweite Führungseinrichtung in ihrer Gesamtheit in radialer Richtung R verstellt werden kann. Auf diese Weise kann die Vorrichtung auf unterschiedliche Behältnisdurchmesser angepasst werden. Das Bezugszeichen 25 kennzeichnet einen entsprechenden Antrieb zur Verstellung der Führungseinrichtung 24. Dabei kann es sich beispielsweise um einen pneumatischen oder auch hydraulischen Antrieb handeln, es wären jedoch auch elektromotorische Antriebe denkbar.

Das Bezugszeichen 26 kennzeichnet ein Trageelement mit kreissegmentförmigem Querschnitt, das zur Befestigung der Führungseinrichtung 14 dient. Dabei bewirkt dieses Trageelement 26 vorteilhaft, dass sich die Führungseinrichtung 14 in Umfangsrichtung gleichmä-βig in radialer Richtung bewegt.

Über einen Behältnisauslauf 62 werden die Behältnisse ausgeführt, wobei es sich hier beispielsweise um ein Transportband handeln kann. Die gesamte Vorrichtung 1 weist hier eine höhenverstellbare Sternsäule auf. Bei der Einrichtung 5 kann es sich hier ebenfalls um eine Transporteinrichtung aber auch eine beispielsweise um eine Behälterbehandlungsmaschine, wie beispielsweise einen Verschließer handeln. Die Trägereinrichtung 18 ist hier, wie gesagt, als Sternsäule mit Sternaufnahme ausgebildet. Auch die Transporteinrichtung bzw. der Behältnisauslauf 62 kann dabei eine motorisch verstellbare Geländerführung aufweisen, um eine Anpassung an unterschiedliche Behältnisse zu erreichen. Das Bezugszeichen 63 bezieht sich auf einen Antrieb um diese Geländer hier in Richtung des Pfeils P2 zu verstellen.

Im Bereich des Antriebs 8 kann auch ein Schleifringüberträger für die elektrische Stromversorgung und die Signale bzw. Druckluft oder auch Hydraulikflüssigkeit vorgesehen sein.

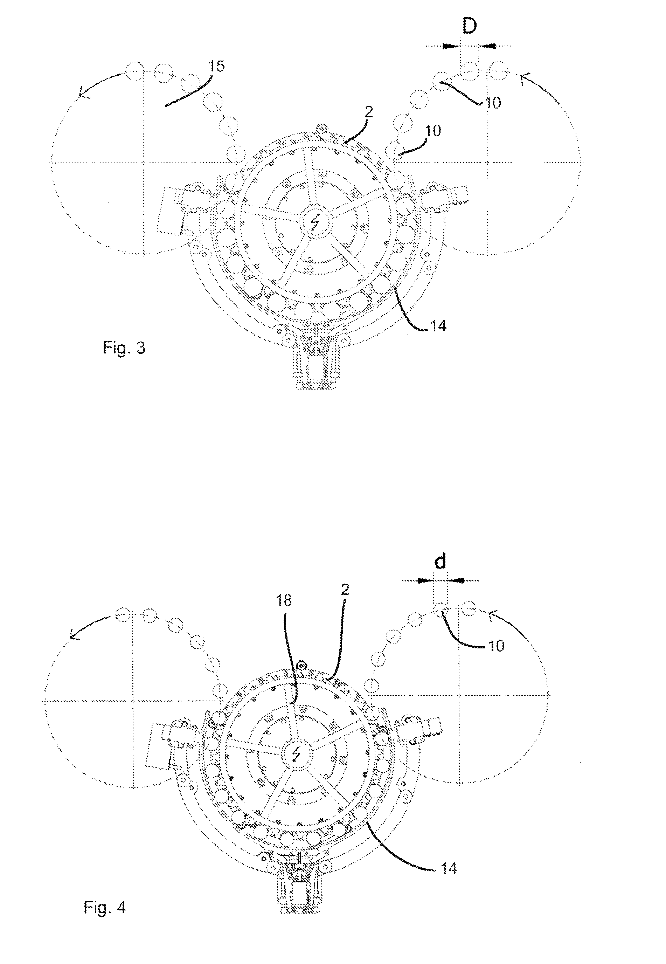

Fig. 3 zeigt eine weitere Darstellung der in Fig. 2 gezeigten Vorrichtung. Man erkennt hier zusätzlich eine weitere Behandlungseinheit 15, bei der es sich beispielsweise auch um eine Etikettiermaschine handeln kann. Bei der in Fig. 3 gezeigten Darstellung weisen die Behältnisse 10 einen bestimmten vorgegebenen Durchmesser D auf.

Fig. 4 zeigt die Vorrichtung aus Fig. 3, welche jedoch für Behältnisse 10 mit einem kleineren Durchmesser d umgestellt wurde. In diesem Falle wurde zweite Führungseinrichtung 14 in radialer Richtung näher an das Trägerrad 18 herangeschoben und auch die einzelnen Führungselemente 2 wurden, wie unten genauer erläutert, auf einen engeren Behältnisdurchmesser d umgestellt.

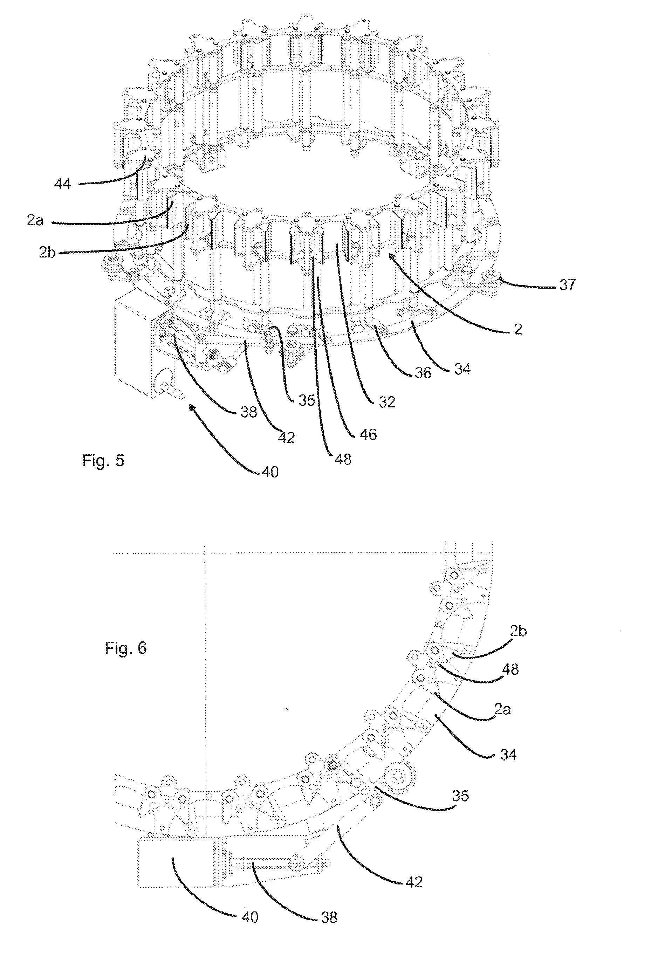

Fig. 5 zeigt eine perspektivische Darstellung einer erfindungsgemäßen Vorrichtung 1. Man erkennt, dass diese Vorrichtung 1 eine Vielzahl von Führungselementen 2 aufweist, wobei diese Führungselemente 2 jeweils Seitenteile bzw. Backen 2a und 2b aufweisen, welche zur Aufnahme der Behältnisse zusammenwirken. Diese Seitenteile 2a und 2b sind dabei jeweils an einem Träger 44 angelenkt, wobei deren Schwenkachsen Y parallel zu einer Längsrichtung der Behältnisse und auch zu der Drehachse des gesamten Trägers 44 verlaufen.

Das Bezugszeichen 40 kennzeichnet in seiner Gesamtheit eine Stelleinrichtung, um die Führungselemente auf die unterschiedlichen Behältnisdurchmesser einzustellen. Dabei ist hier ein Hydraulik- oder Pneumatikzylinder vorgesehen, der über ein Gestänge 35, 38 und 42 einen Stellring 34 betätigt, wobei an diesem Stellring eine Vielzahl von Betätigungsarmen 36 angelenkt ist, die auf diese Weise verschwenkt werden. Durch eine Bewegung dieser Betätigungsarme 36 werden die einzelnen Seitenteile geschwenkt. Der Stellring 34 wird wiederum von Führungsrollen 37 geführt. Die Schwenkbewegung der Betätigungsarme 36 wird über Stangen 46 jeweils auf die Führungsseitenteile 2a und 2b übertragen. Dabei wird durch die Bewegung bzw. Drehung einer dieser Stangen 46 ein Seitenteil 2a eines ersten Führungselements und ein zweites Seitenteil 2b eines benachbarten Führungselementes 2 bewegt.

Fig. 6 zeigt eine Draufsicht auf einen Ausschnitt der Vorrichtung aus Fig. 5. Man erkennt hier eine Verzahnung 48, welche zwei benachbarte Seitenteile 2a und 2b miteinander koppelt. Auf diese Weise kann wie in Fig. 6 dargestellt, durch eine Bewegung des Kolbens bzw. der Stange 38 und eine damit gekoppelte Bewegung der Übertragungsstange 42 der Hebel 36 bewegt werden. Auf diese Weise bewegt sich auch der Ring 34 und damit in ihrer Gesamtheit sämtliche Betätigungsarme 36 den jeweiligen Stangen 46 zugeordnet sind.

Auf diese Weise kann ein gleichzeitiges Schwenken sämtlicher Seitenteile 2a und 2b und damit eine Bewegung sämtlicher Führungselemente vorgenommen werden. So können einheitlich sämtliche Führungselemente auf neue Behältnisdurchmesser angepasst werden. Die Betätigungsstange 38 kann dabei auch als Spindel ausgeführt sein und der Antrieb 40 beispielsweise ein Elektromotor sein. Dabei soll sowohl eine stufenlose Einstellung als auch eine gestufte Einstellung der Führungselemente möglich sein.

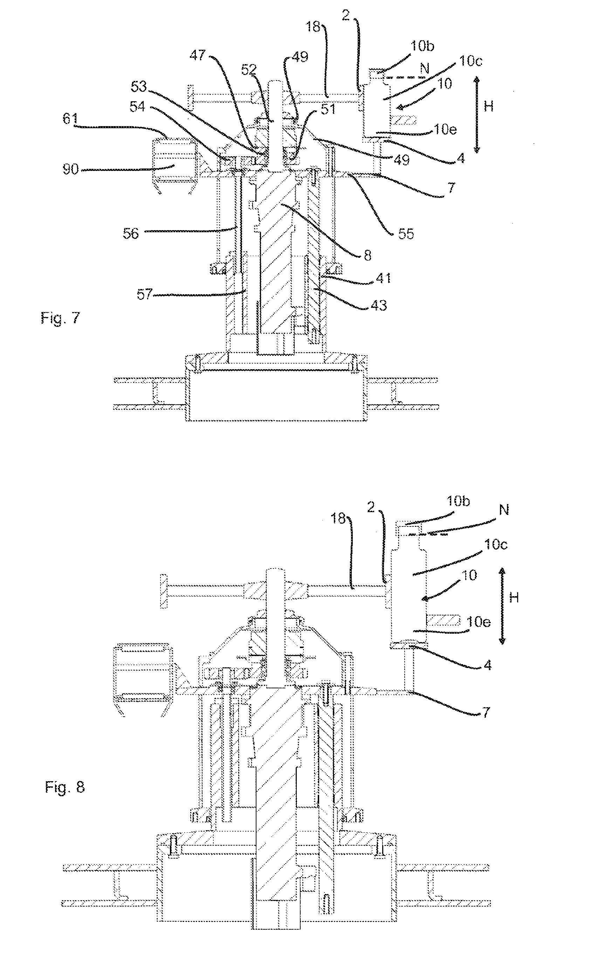

Fig. 7 zeigt eine Schnittdarstellung einer erfindungsgemäßen Vorrichtung 1. Man erkennt auch hier wieder die Führungselemente 2 bzw. Führungstaschen, die an einem Träger 18 angeordnet sind, wobei dieser Träger um die Achse X mit Hilfe einer Welle 52 drehbar ist. Das Bezugszeichen 4 zeigt hier wieder das Bodenstützelement, welches, wie oben erwähnt, hinsichtlich seiner Höhe verstellbar ist. An dem Behältnis 10 ist hier auch ein Verschluss 10b angeordnet, so dass das Behältnis nur noch unterhalb des Tragrings gegriffen werden kann, falls ein Neckhandling gewünscht ist.

Das Bezugszeichen 8 zeigt einen (nicht im Detail dargestellten) Antrieb für die Anordnung. Die Höhenverstellung erfolgt über einen erstes Zahnrad 51 sowie ein zweites Zahnrad 54. Über eine Kupplung 47 kann das zweite Zahnrad 54 mit dem ersten Zahnrad 51 in Eingriff gebracht werden, so dass die Höhenverstellung erfolgen kann. Falls eine derartige Kopplung vorliegt, wird über das zweite Zahnrad 54 eine Drehspindel 56 gedreht, die in einem Gewinde 57 angeordnet ist. Vorteilhaft sind zwei derartige Spindeln an dem Teilkreis der Vorrichtung angeordnet. Weiterhin ist eine Stange 43 vorgesehen, die in eine entsprechende Ausnehmung 41 bzw. Führung zur Stabilisierung einfährt. Diese Stange bzw. dieser Führungsbolzen 43 ist dabei ebenfalls vorteilhaft zweimal an dem Teilkreis vorhanden.

Das Bezugszeichen 49 bezieht sich auf eine Dichtung zwischen dem drehenden und dem stehenden Teil der Vorrichtung. Dabei können beispielsweise Labyrinthdichtungen oder dergleichen zur Anwendung kommen. Das Bezugseichen N kennzeichnet die hier konstant zu haltende Höhe des Neckrings.

Die Fördereinrichtung bzw. das Transportband 92 wird gemeinsam mit dem Bodenstützelement 4 nach oben oder nach unten verschoben. Genauer gesagt wird eine Auflagefläche bzw. Übergabefläche 61, auf welche das Behältnis aufgeschoben wird, ebenfalls nach oben oder unten verschoben, wodurch wie oben erwähnt, die Höhe des Gewindes bzw. des Neckringhöhe M konstant bleiben kann. Das Bezugszeichen 55 kennzeichnet einen Träger, an dem das Bodenstützelement und hier auch die Auflagefläche angeordnet ist.

Fig. 8 zeigt die Vorrichtung aus Fig. 7, wobei hier ein längeres Behältnis gegriffen werden soll. Man erkennt, dass hier das Bodenstützelement 4 abgesenkt wurde und mit dem Bodenstützelement auch bevorzugt die Führungselemente 2. Diese liegen nun weiter unten an dem mittleren Bereich 10c des Behältnisses an. Dieser mittlere Bereich erstreckt sich zwischen dem Bodenbereich und dem Halsbereich des Behältnisses 10. Damit verändert sich der Abstand zwischen dem Bodenstützelement 4 und dem Führungselement 2 in der Höhenrichtung H nicht. Es wäre jedoch auch in einer anderen Ausführungsform möglich, dass sich der Abstand zwischen den beiden Elementen 2 und 4 in der Höhenrichtung ändert. Man erkennt, dass hier in der Gewindespindel 56 vollständig in das Gewinde 57 eingefahren ist. Das Bezugszeichen 53 kennzeichnet eine Lagerungseinrichtung zum Lagern des ersten Zahnrades 51. Man erkennt dass das Führungselement die Behältnisse in jedem Fall an deren Umfangswandung zwischen dem Halsbereich 10d und dem Bodenbereich 10e kontaktiert. Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Vorrichtung / Transporteinrichtung
- 2: Führungselement, Führungseinrichtung
- 2a, 2b: Seitenteile
- 4: Bodenstützelement
- 5: Einrichtung
- 8: Antriebseinrichtung
- 10: Behältnisse
- 10b: Verschluss
- 10c: mittlerer Bereich
- 10d: Halsbereich des Behältnisses
- 10e: Bodenbereich des Behältnisses
- 14: Führungseinrichtung
- 15: Behandlungseinheit
- 18: Trägerrad
- 25: Antrieb
- 24, 40: Stelleinrichtung
- 26: Stelleinrichtung
- 34: Stellring
- 36: Betätigungsarme
- 37: Führungsrollen
- 35, 38, 42: Gestänge
- 40: Stelleinrichtung
- 41: Ausnehmung
- 43: Stange
- 44: Träger
- 46: Stangen
- 47: Kupplung
- 48: Verzahnungen
- 49: Dichtung
- 51: erstes Zahnrad
- 52: Welle
- 53: Lagerungseinrichtung
- 54: zweites Zahnrad
- 56: Gewindespindel
- 57: Gewinde
- 61: Übergabefläche
- 62: Behältnisauslauf
- 63: Antrieb
- 80: Anlage
- 82: Einlauf
- 84: Fülleinrichtung
- 86: Verschließer
- 88: Teilungsverzugstern
- 90: Etikettiermaschine
- 92: Auslauf / Riemenauslauf
- D, d: Durchmesser
- H: Höhenrichtung
- N: Höhe
- P1, P2: Pfeil
- Y: Schwenkachse
- X: Drehachse des Trägers
- R: radiale Richtung

## Patentansprüche

1. Vorrichtung (1) zum Transportieren von Behältnissen (10), mit einem Führungselement (2), welches das Behältnis in wenigstens einem Bereich von dessen Umfangswandung kontaktiert und das Behältnis auf einem vorgegebenen Pfad führt, mit einer Antriebseinrichtung (8), welche das Führungselement (2) antreibt, um das Behältnis (10) zu transportieren und mit einem Bodestützelement (4), welches das Behältnis zumindest zeitweise während des Transports an einem Bodenbereich (10a) des Behältnisses (10) stützt,
**dadurch gekennzeichnet, dass**
das Bodenstützelement (4) in einem bestimmten Umstellbetrieb höhenverstellbar ist, indem eine Bewegung eines Antriebselementes (54) zur Höhenverstellung des Bodenstützelementes (4) mittels einer Kupplung (47) mit einer Bewegung der Antriebseinrichtung (8) koppelbar ist.

2. Vorrichtung nach wenigstens einem der vorangegangenen Ansprüche
**dadurch gekennzeichnet, dass**
das Bodenstützelement in der Transportrichtung der Behältnisse (10) stationär angeordnet ist.

3. Vorrichtung nach wenigstens einem der vorangegangenen Ansprüche,
**dadurch gekennzeichnet, dass**
die Vorrichtung (1) ein zweites Führungselement (14) aufweist, welches von dem ersten Führungselement (2) verschieden ist und die Behältnisse während ihres Transports führt.

4. Vorrichtung nach wenigstens einem der vorangegangenen Ansprüche,
**dadurch gekennzeichnet, dass**
wenigstens ein Führungselement einen veränderbaren Aufnahmequerschnitt zur Aufnahme der Behältnisse aufweist.

5. Vorrichtung nach wenigstens einem der vorangegangenen Ansprüche,
**dadurch gekennzeichnet, dass**
die Vorrichtung eine Vielzahl von ersten Führungselementen (2) aufweist.

6. Anlage zum Behandeln von Behältnissen, mit einer Verschließeinrichtung zum Verschließen der Behältnisse mit Verschlüssen und einer in einer Transportrichtung der Behältnisse nach der Verschließeinrichtung angeordneten Vorrichtung zum Transportieren von Behältnissen (10) nach wenigstens einem der vorangegangenen Ansprüche.

7. Verfahren zum Transportieren von Behältnissen (10), wobei die Behältnisse mittels eines angetriebenen Führungselements (2) entlang eines vorgegebenen Transportpfades transportiert werden und während dieses Transports wenigstens zeitweise ein Bodenabschnitt (10a) der Behältnisse (10) mittels eines Bodenstützelements (4) abgestützt wird,
**dadurch gekennzeichnet**, das
das Bodenstützelement wenigstens zeitweise hinsichtlich seiner Höhe in einem bestimmten Umstellbetrieb verändert wird, indem eine Bewegung eines Antriebselementes (54) zur Höhenverstellung des Bodenstützelementes (4) mittels einer Kupplung (47) mit einer Bewegung der Antriebseinrichtung (8) gekoppelt wird.

8. Verfahren nach Anspruch 7,
**dadurch gekennzeichnet, dass**
das die Veränderung der Höhe des Bodenstützelements (4) zur Anpassung der Vorrichtung auf unterschiedliche Behältnishöhen (H) erfolgt.

## Claims

1. An apparatus (1) for conveying containers (10) with a guiding element (2) which contacts the container in at least one area of the peripheral wall thereof and guides the container on a pre-set path, with a driving device (8) which drives the guiding element (2) in order to convey the container (10), and with a base support element (4) which supports the container at least in part during the conveying in a base region (10a) of the container (10), **characterized in that** the base support element (4) is vertically displaceable in a defined changing mode, wherein a movement of a driving element (12) for the vertical adjustment of the base support element is capable of being coupled to a movement of the driving device (8) by means of a coupling device (47).

2. An apparatus (1) according to at least one of the preceding claims, **characterized in that** the base support element is arranged stationary in the conveying direction of the containers (10).

3. An apparatus (1) according to at least one of the preceding claims, **characterized in that** the apparatus (1) has a second guiding element (14) which is different from the first guiding element (2) and which guides the containers during the conveying thereof.

4. An apparatus (1) according to at least one of the preceding claims, **characterized in that** at least one guiding element has a variable receiving cross-section for receiving the containers.

5. An apparatus (1) according to at least one of the preceding claims, **characterized in that** the apparatus has a plurality of first guiding elements (2).

6. A plant for the treatment of containers, with a closure device for closing the containers with closures and an apparatus arranged downstream of the closure device in the conveying direction of the containers for conveying the containers (10), according to at least one of the preceding claims.

7. A method of conveying containers (10), wherein the containers are conveyed by means of a driven guiding element (2) along a pre-set conveying path, and during this conveying a base portion (10a) of the containers (10) is supported by means of a base support element (4) at least temporarily, **characterized in that** the base support element is changed with respect to the height thereof at least temporarily in a defined changing mode, wherein a movement of a driving element (12) for the vertical adjustment of the base support element is coupled to a movement of the driving device (8) by means of a coupling device (47).

8. A method according to claim 7, **characterized in that** the change in the height of the base support element (4) is carried out in order to adapt the apparatus to different heights (H) of the containers.

## Revendications

1. Système (1) pour le transport de récipients (10), avec un élément de guidage (2) qui contacte le récipient sur au moins une partie de sa paroi périphérique et guide le récipient sur un trajet défini, avec un dispositif d'entraînement (8) entraînant l'élément de guidage (2) pour transporter le récipient (10), et avec un élément de support (4) du fond qui supporte le récipient au moins temporairement pendant le transport au niveau d'une zone de fond (10a) du récipient (10),
**caractérisé**
**en ce que** l'élément de support (4) du fond est réglable en hauteur dans un mode de manoeuvre défini, un déplacement d'un élément d'entraînement (54) pour le réglage de hauteur de l'élément de support (4) du fond pouvant être associé à un déplacement du dispositif d'entraînement (8) au moyen d'un accouplement (47).

2. Système selon au moins une des revendications précédentes, **caractérisé**
**en ce que** l'élément de support du fond est disposé de manière fixe dans la direction de transport des récipients (10).

3. Système selon au moins une des revendications précédentes, **caractérisé**
**en ce que** le système (1) comprend un deuxième élément de guidage (14) différent du premier élément de guidage (2) et qui guide les récipients pendant leur transport.

4. Système selon au moins une des revendications précédentes, **caractérisé**
**en ce qu'**au moins un élément de guidage présente une section de réception variable pour la réception des récipients.

5. Système selon au moins une des revendications précédentes, **caractérisé**
**en ce que** le système comprend une pluralité de premiers éléments de guidage (2).

6. Installation de traitement de récipients, avec un dispositif de fermeture pour l'obturation des récipients au moyen de bouchons et un système pour le transport de récipients (10) selon au moins une des revendications précédentes, disposé en aval du dispositif de fermeture dans la direction de transport des récipients.

7. Procédé de transport de récipients (10), où les récipients sont transportés le long d'un chemin de transport défini au moyen d'un élément de guidage (2) entraîné, et où, au moins temporairement pendant ce transport, une zone de fond (10a) des récipients (10) est supportée par un élément de support (4) du fond,
**caractérisé**
**en ce que** la hauteur de l'élément de support du fond est changée au moins temporairement dans un mode de manoeuvre défini, un déplacement d'un élément d'entraînement (54) pour le réglage de hauteur de l'élément de support (4) du fond étant associé à un déplacement du dispositif d'entraînement (8) au moyen d'un accouplement (47).

8. Procédé selon la revendication 7,
**caractérisé**
**en ce que** le changement de hauteur de l'élément de support (4) du fond est effectué pour ajuster le système à différentes hauteurs (H) de récipient.
